# EUROPEAN PATENT APPLICATION

(11) **EP 0 989 400 A1**
(43) Date of publication of application: **29.03.2000**
(21) Application number: 99306431.0
(22) Date of filing: 16.08.1999
(51) Int. Cl.: G01N 27/416

(54) **Method and apparatus for measuring the acid level of hydraulic fluid in a hydraulic system**

(30) Priority: 03.09.1998 US 146149
(71) Applicant: R. E. Davis Chemical Corporation, Oak Brook, Illinois 60521 (US)
(72) Inventor: Davis, Robert E., Hillsdale, Illinois 60521 (US)
(74) Representative: Pearce, Anthony Richmond

(57) **Abstract**

A method and apparatus for measuring the acid level of hydraulic fluid in a hydraulic system. The hydraulic system contains a phosphate ester fluid and at elevated temperatures, in the presence of moisture, the phosphate ester degrades to produce an acid component. A pair of dissimilar metals are located in the hydraulic system in contact with the degraded hydraulic fluid and are connected in a galvanic circuit A voltage is created in the circuit through galvanic action and is employed to generate an audio or visual signal that indicates the acid level of the fluid.

## Description

### BACKGROUND OF THE INVENTION

In the past, aviation hydraulic fluids were based on either vegetable or petroleum oil. However, these fluids are highly flammable and, as a result, the aviation industry more recently has gone to fluids such as phosphate esters which are fire resistant. While phosphate esters have the advantage of being fire resistant, at elevated temperatures the phosphate esters can be subject to degradation. For example, at temperatures above 90°C and in the presence of water, the phosphate esters will hydrolyze forming acids and alcohols. At higher temperatures above 160°C oxidation of the phosphate esters will occur, resulting in the formation of acids and a polymeric sludge. At temperatures above 200°C, pyrolysis or thermal degradation of the phosphate ester fluid will occur.

Oxidation and pyrolysis are not major contributors to acid formation in phosphate ester hydraulic fluids in aircraft service. The major cause of acid formation in these fluids is hydrolysis, due to the fact that temperatures in the fluid generally do not reach 160°C.

It is not possible to prevent acid formation in phosphate ester fluids of hydraulic systems, because they are highly hygroscopic and absorb moisture from the atmosphere. Thus, as long as moisture is present, hydrolysis of the phosphate ester fluids will occur.

Recently changes in air frame and jet engine design have, in some cases, produced higher temperatures in the hydraulic fluid. Heating of the fluid can be caused by external sources, such as air conditioning waste heat or bleed air routing, or excessive temperatures can also be the result of improper cooling or malfunctioning of the electrical system or blockage of the flow of hydraulic fluid. The increase of temperatures of the hydraulic fluid in service has resulted in the increase of acid levels and other compounds in the fluid which can result in metal etching or corrosion of metal components of the hydraulic system, or degradation of plastic components in the system.

In order to prevent the increase of acid level in the phosphate ester hydraulic fluid, it has been proposed to incorporate additives in the fluid in an attempt to neutralize the acid components as they are formed, and slow down the hydrolysis reaction. Another approach has been to add absorbents, such as Fuller's earth or activate alumina, to the fluid to adsorb the acid. However, the use of additives or adsorbents has not been successful, because these compounds will only remove a finite amount of the acid component and can also produce sludge-like products that can have an adverse effect on the operation of the hydraulic system.

Because of this there has been a distinct need for a mechanism that is capable of measuring the acid level in phosphate ester hydraulic fluids of aircraft hydraulic systems, so as to provide a warming when the acid level is at a value which could cause corrosion or degradation to the components of the hydraulic system.

### SUMMARY OF THE INVENTION

The invention is directed to a method and apparatus for measuring the activity of the acid level of phosphate ester hydraulic fluid and has particular application for measurement of the acid level of the fluid in the hydraulic system of an aircraft.

During service, the phosphate ester fluid in a hydraulic system of a aircraft can be subjected to elevated temperatures that can approach 160°C or more. The phosphate ester fluid is highly hygroscopic and will absorb moisture from the atmosphere. At elevated temperatures above about 90°C, hydrolysis of the fluid will occur to produce a degraded fluid containing an acid component. Under extreme conditions, the acid level can increase to a value which can cause corrosion or etching of the metal components of the hydraulic system, and the resulting presence of metal salts will prevent the reversal of the hydrolysis. In addition, the hydrolysis can produce solvents which can cause degradation of plastic components of the system.

In accordance with the invention, a pair of dissimilar metals are exposed to the hydraulic fluid in the system and are connected in an electrical circuit. Generation of the acid component in the fluid by hydrolysis will create a voltage in the electrical circuit through galvanic action and the voltage can be employed to provide a visual indication of the voltage, such as through use of a voltmeter. Alternately, the voltage can be employed to generate an audio signal, such as a horn, if the voltage, which is a representation of the acid level, reaches a preselected elevated value.

The invention provides a continuous reading or indication of the acid level of the phosphate ester hydraulic fluid both at ambient temperatures and at elevated temperatures during service.

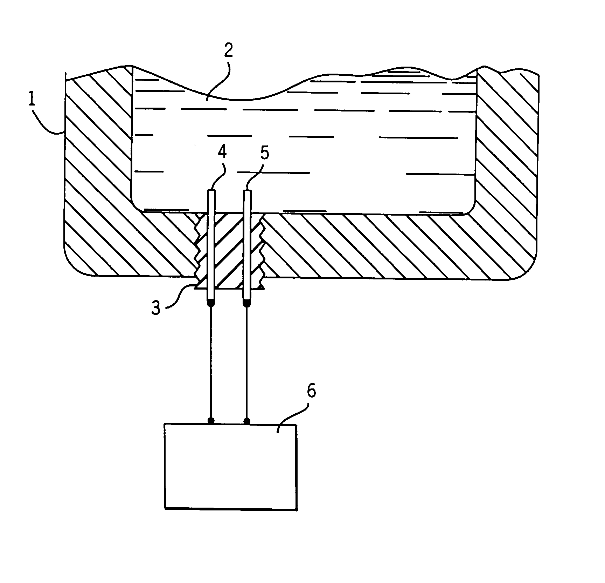

### BRIEF DESCRIPTION OF THE DRAWING

The drawing illustrates the best mode presently contemplated of carrying out the invention.

In the drawings:

The drawing is a schematic representation of a portion of a hydraulic system of an aircraft incorporating the invention

### DESCRIPTION OF THE ILLUSTRATED EMBODIMENT

The invention is directed to a method and apparatus for determining the acid level of a phosphate ester hydraulic fluid and the invention has particular application for determining the acid level of fluid in the hydraulic system of an aircraft. Phosphate esters are commonly used as hydraulic fluids in the hydraulic systems of aircraft because of their fire resistant properties. In general, the phosphate esters have the following chemical structure: 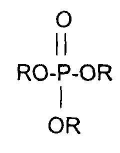 where R can be an alkyl group containing 1 to 20 carbon atoms, or an aryl group containing 2 to 20 carbon atoms. Specific examples of typical phosphate ester hydraulic fluids are triethyl phosphate and triphenyl phosphate .

In service a phosphate ester hydraulic fluid in an aircraft can be exposed to extreme temperatures of perhaps -40°C to 200°C. For example, in winter the hydraulic fluid of a parked aircraft can be exposed to temperatures as low as -40°C, while in service the fluid can be heated to temperatures up to 200°C. The heating of the hydraulic fluid can be caused by the aircraft design, in which an external heat source, such as air conditioning waste heat or bleed air routing, is located adjacent the hydraulic lines and can cause heating of the fluid. In addition, heating of the fluid can be caused by inadequate or improper cooling systems for the fluid, electrical malfunctions, or a blockage of the flow of the fluid which can prevent dissipation of heat from the pumps in the system. It is recognized that phosphate esters will react with water in the ester or from other sources, to form an acidic phosphate ester and alcohol. This reaction is more pronounced at temperatures above 90°C. It has been found that up to temperatures of about 140°C this reaction is reversible, and the acidic phosphate ester will convert back to the phosphate ester as the temperature is decreased to ambient. At temperatures above 140°C, the ester will become further degraded by the production of di-hydrogen phosphate esters and at temperatures above 170°C further degradation will occur to form phosphoric acid. At the latter stage of degradation, the reaction is not reversible, so that the high acid level will remain in the product, even when the temperature of the product is reduced to ambient. The high acid level in the fluid can cause corrosion or etching of metal components of the hydraulic system and can cause degradation or decomposition of polymeric components of the system.

It has been found that due to the high temperatures to which the hydraulic fluid may be subjected in service, i.e. up to 170°C, a conventional pH sensing mechanism cannot be employed to provide an indication of the pH and hence the acid level of the fluid.

In accordance with the invention, the acid level in the phosphate ester fluid is measured by a galvanic sensing device. As shown in the drawing, the hydraulic system can include a sump or reservoir 1 which contains the phosphate ester hydraulic fluid 2. A plug 3, preferably formed of a non-conductive polymeric material, is threaded, or otherwise secured, within an opening in the reservoir 1, and a pair of electrodes 4 and 5 are mounted in spaced, sealed relation within the plug. The inner ends of the electrodes are exposed to the fluid 2, while the outer ends of the electrodes are connected through an electrical circuit to a device, such as a voltmeter 6, for indicating the EMF or voltage generated by the galvanic circuit.

The electrodes 4 and 5 are formed of dissimilar metals that preferably are considerably separated in the electromotive table. The metals can take the form of stainless steel, copper, aluminum, zinc, or the like.

Alternately, a single wire or electrode can be employed, and in this case, a component of the hydraulic system can constitute the second and dissimilar metal. For example, a copper or ferrous wire or electrode can be mounted in insulated relation in an aluminum pump casing and the electrode and casing can be connected in a galvanic circuit.

While the drawing has shown the dissimilar metal electrodes 4 and 5 to be mounted in the reservoir 1, it is contemplated that the electrodes can be located anywhere in the hydraulic system in contact with the fluid.

Voltmeter 6 would be mounted in a location in the aircraft where it can be readily seen by the pilots, or other personnel, and the reading of the voltmeter would provide an indication of the acid level of the hydraulic fluid.

With fresh hydraulic fluid at ambient temperature, there would be no indicated voltage on voltmeter 6. During service, as the temperature of the fluid is increased, the fluid could be subjected to hydrolysis causing the formation of acid components in the fluid. Through galvanic action, a voltage would be generated which would be indicated on the voltmeter 6. As the temperature of the fluid is decreased toward ambient temperature, the voltage would go down, but not to its original level, as a portion of the acidic components would not be reconverted to phosphate ester and as a result a standing voltage would be indicated on the voltmeter. During further service, in which the fluid was subjected to elevated temperatures above 90°C, further quantities of acid components would be generated and again a portion of the acid components would not be reconverted to the phosphate ester, thus increasing the standing voltage at ambient temperature.

If the hydraulic fluid is exposed to extremely high temperatures of above about 170°C, the fluid may be substantially fully degraded, forming phosphoric acid which will not convert back to the ester on a return of the fluid to ambient temperature. However, the acid produced by the degradation could react with ferrous or other metallic components of the hydraulic system to form salts which could correspondingly reduce the acid level, so that even with a fully degraded fluid the acid level at ambient temperature could be somewhat less than that at elevated temperature.

While the above description has shown the galvanic circuit being connected to a voltmeter to provide an indication of voltage and the corresponding acid level, it is contemplated that the galvanic circuit could also be connected to an audio signal, such as a horn, which would generate a signal if the acid level reached a preselected value.

The invention provides a simple and effective method of measuring the acid level of phosphate ester hydraulic fluids at elevated temperatures. The device of the invention provides a continuous indication of the acid level both at ambient temperatures and at elevated temperatures of operation, thus enabling aircraft personnel to monitor the condition of the fluid and change the fluid when the acid level reaches a state where it could cause corrosion of the metallic components of the system and/or of decomposition of the plastic components.

Various alternatives and embodiments are contemplated as being within the scope of the following claims particularly pointing out and distinctly claiming the subject matter regarded as the invention.

## Claims

1. A method of measuring the acid level of a hydraulic fluid in a hydraulic system, comprising the steps of flowing a phosphate ester containing moisture through a hydraulic system, hydrolyzing the phosphate ester to produce a hydrolyzed fluid containing an acid component, exposing the hydrolyzed fluid containing said acid component to a pair of dissimilar metals located in said hydraulic system to thereby create a voltage through galvanic action, and measuring the voltage generated to provide an indication of the acid level.

2. The method of claim 1, wherein the step of flowing the phosphate ester fluid through a hydraulic system comprises flowing the fluid through the hydraulic system of an aircraft.

3. The method of claim 1, and including the step of heating the fluid in the hydraulic system to a temperature in the range of 30°C to 170°C

4. The method of claim 1, wherein said dissimilar metals are selected from the group consisting of a ferrous metal, copper and aluminum.

5. The method of claim 1, wherein the dissimilar metals comprise a pair of electrodes mounted in insulated relation in the hydraulic system.

6. The method of claim 1, wherein one of the dissimilar metals comprises as metal component of the hydraulic system and the other of said dissimilar metals comprises an electrode mounted in insulated relation in said component.

7. A method of measuring the acid level of a hydraulic fluid in a hydraulic system comprising the steps of disposing a phosphate ester fluid containing moisture in a hydraulic system, heating the fluid to a temperature sufficient to cause hydrolysis of the phosphate ester and produce a hydrolyzed fluid containing an acid component, mounting a pair of dissimilar metals in spaced relation in an electrically non-conductive plug, mounting the plug in the wall of the hydraulic system with the dissimilar metals being exposed to the hydrolyzed fluid to thereby create a voltage through galvanic action, and measuring the voltage to thereby provide an indication of the acid level of the fluid.

8. An apparatus for measuring the acid level of a hydraulic fluid in a hydraulic system, comprising a hydraulic system, a quantity of a phosphate ester containing moisture disposed in said hydraulic system and having an elevated temperature above 90°C, said fluid being subjected to hydrolysis at said elevated temperature to produce a degraded fluid containing an acid component, a pair of dissimilar metals disposed in said hydraulic system in contact with said fluid and connected in an electrical circuit, said acid component causing the generation of a voltage in said circuit through galvanic action, and means operably connected in said circuit for measuring the voltage generated through said galvanic action.

9. The apparatus of claim 8, wherein said means for measuring said voltage comprises a voltmeter having a dial to indicate the voltage generated.

10. The apparatus of claim 8, and including an electrically non-conductive plug mounted in a wall of said hydraulic system, said dissimilar metals being mounted in spaced sealed relation in said plug and each of said dissimilar metals having an inner end exposed to said fluid.

11. The apparatus of claim 10, wherein said wall borders a reservoir for said hydraulic fluid.

12. The apparatus of claim 8, wherein one of the dissimilar metals comprises as metal component of the hydraulic system and the other of said dissimilar metals comprises an electrode mounted in insulated relation in said component.

13. An apparatus for measuring the acid level of hydraulic fluid in a hydraulic system, comprising a hydraulic system, a quantity of phosphate ester containing moisture disposed in said hydraulic system, said fluid being exposed in service to temperatures sufficiently high to cause hydrolysis of said phosphate ester to produce a degraded fluid containing an acid component, a plug formed of an electrically non-conductive material disposed within an opening in a wall of said hydraulic system, a pair of dissimilar metal electrodes mounted in spaced sealed relation in said plug and each electrode having an inner end exposed to said fluid and having an outer end connected in a galvanic circuit, the generation of said acid component causing a voltage to be produced in said galvanic circuit through galvanic action, and a voltmeter operably connected in said galvanic circuit to measure the voltage and provide an indication of the acid level of said fluid.
